# EUROPÄISCHE PATENTANMELDUNG

(11) **EP 0 775 857 A1**
(43) Veröffentlichungstag der Anmeldung: **28.05.1997**
(21) Anmeldenummer: 96810788.8
(22) Anmeldetag: 14.11.1996
(51) Int. Cl.: F16J 15/16

(54) **Berührungsdichtung für Strömungsmaschinen**

(30) Priorität: 24.11.1995 DE 19543764
(71) Anmelder: ASEA BROWN BOVERI AG, 5400 Baden (CH)
(72) Erfinder: Bättig, Josef, 5704 Egliswil (CH); Kutay, Mehmet Güven, 5400 Baden (CH)
(74) Vertreter: Liebe, Rainer

(57) **Zusammenfassung**

Aufgabe der Erfindung ist es, eine auch für hohe Umfangsgeschwindigkeiten und hohe Temperaturen geeignete Berührungsdichtung für solche Strömungsmaschinen zu schaffen. Erfindungsgemäss wird dies dadurch erreicht, dass die Berührungsdichtung (12) zumindest zweiteilig ausgebildet ist und aus einem dünnen Tragring (13) sowie einem Dichtungsring (14) besteht. Der Dichtungsring (14) wird aus einem verschleissfesten, ausreichend öl- und wärmebeständigen Material gefertigt, während der Tragring (13) aus einem auch bei hohen Belastungen vollkommen reversiblen, elastischen Werkstoff, vorzugsweise aus Federstahl besteht. Letzterer weist ein inneres Befestigungsteil (17) und ein äusseres Tragteil (18) auf. Das Tragteil (18) ist formschlüssig mit dem Dichtungsring (14) verbunden. Zumindest das Tragteil (18) ist in Richtung der Dichtfläche (16) geneigt ausgebildet.

## Beschreibung

### Technisches Gebiet

Die Erfindung betrifft eine Berührungsdichtung für schnellaufende und/oder hohe Temperaturen im Dichtungsbereich aufweisende Strömungsmaschinen, gemäss dem Oberbegriff des Anspruchs 1.

### Stand der Technik

Neuere, mit einer externen Ölversorgung betriebene Abgasturbolader weisen zumeist eine Gleitlagerung zwischen dem Turbinen- und dem Verdichterrad auf. Zur Abdichtung des Lagergehäuses gegenüber dem Strömungsgehäuse von Turbine und Verdichter werden bevorzugt berührungslose Dichtungen, wie Labyrinthe, Kolbenringe usw. eingesetzt.

Solche Dichtungen verschleissen nicht und sind zudem relativ preisgünstig. Der Nachteil berührungsloser Dichtungen ist jedoch, dass sie immer dann Ölleckagen aufweisen, wenn der lagerseitige Druck den Druck auf der Luft- bzw. Abgasseite übersteigt. Dies ist insbesondere bei Motorleerlauf und erhöhtem Ansaug-Unterdruck der Fall.

Abhilfe wurde hier mit der aus dem SE 212 843 bekannten Berührungsdichtung geschaffen, welche aus Elastomeren besteht. Dieser sogenannte "V-Ring" liegt bei Leerlauf des Motors am Dichtungsbereich an und hebt erst bei einer bestimmten, oberhalb des kritischen Betriebszustandes liegenden Drehzahl ab. Damit wird sein vorzeitiger Verschleiss verhindert.

Treten höhere Umfangsgeschwindigkeiten auf, muss der V-Ring allerdings mit einem Metallring abgestützt werden. Für Umfangsgeschwindigkeiten bis zu 150 m/s und kurzzeitige Temperaturen von mehr als 300°C im Dichtungsbereich, wie sie in modernen Turboladern auftreten, sind jedoch auch solche gekapselten V-Ringe nicht geeignet.

Bei anderen Strömungsmaschinen existieren ähnliche Abdichtungsprobleme zwischen benachbarten Arbeitsräumen, wie z.B. zwischen Lager- und Strömungsgehäusen von Gasturbinenanlagen.

### Darstellung der Erfindung

Die Erfindung versucht, alle diese Nachteile zu vermeiden. Ihr liegt die Aufgabe zugrunde, eine Berührungsdichtung für Strömungsmaschinen zu schaffen, welche auch für hohe Umfangsgeschwindigkeiten und hohe Temperaturen geeignet ist.

Erfindungsgemäss wird dies dadurch erreicht, dass bei einer Vorrichtung gemäss dem Oberbegriff des Anspruchs 1, die Berührungsdichtung zumindest zweiteilig ausgebildet ist und aus einem dünnen Tragring sowie einem Dichtungsring besteht. Der Dichtungsring ist aus einem verschleissfesten, ausreichend öl- und wärmebeständigen Material gefertigt. Demgegenüber besteht der Tragring aus einem auch bei hohen Belastungen, wie Drehzahl, Temperatur und Zeit, reversiblen, elastischen Werkstoff. Er weist ein inneres Befestigungsteil und ein äusseres Tragteil auf. Letzteres ist formschlüssig mit dem Dichtungsring verbunden. In montiertem Zustand der Berührungsdichtung ist zumindest das Tragteil in Richtung der Dichtfläche geneigt ausgebildet.

Aufgrund der zweiteiligen Ausbildung können die Dichtungs- und die Befestigungsfunktion der Berührungsdichtung voneinander getrennt und auf speziell für den jeweiligen Zweck ausgebildete Bauteile übertragen werden. Es ist daher möglich, den Dichtungsring aus einem auch bei hohen Temperaturen beständigen Material herzustellen. Das Material des Tragrings gewährleistet die bei hohen Umfangsgeschwindigkeiten erforderliche Stützwirkung für den Dichtungsring. Aufgrund der Neigung des Tragteils in Richtung der Dichtfläche und des elastischen Materials des Tragrings hebt der Dichtungsring bei einer oberhalb des kritischen Betriebszustandes liegenden Drehzahl von der Dichtfläche ab. Entsprechend den zu erwartenden Umfangsgeschwindigkeiten können Tragringe aus unterschiedlichen Materialien eingesetzt werden. Somit ist auch bei extremen Betriebssituationen eine optimale und dauerhafte Abdichtung benachbarter Arbeitsräume einer Strömungsmaschine gewährleistet.

Der Dichtungsring weist vorteilhaft eine Aussenfläche auf, deren Umfang in Richtung der Dichtfläche zunimmt. Am grössten Umfang der Aussenfläche ist eine an der Dichtfläche anliegende Dichtkante ausgebildet. Aufgrund dieser Ausbildung des Dichtungsrings wird die Dichtkante stets ölfrei gehalten. Ausserdem wird auch bei unterschiedlich starken Vorspannungen der Berührungsdichtung stets eine Kantenpressung erzielt. Daraus resultiert eine verbesserte Abdichtung und ein exaktes Einschleifen des Dichtungsrings.

Es ist besonders zweckmässig, wenn der Tragring aus einer Metallmembran, vorzugsweise aus Federstahl, und der Dichtungsring aus einem Hochleistungskunststoff, z.B. PEEK (Polyether-Ether-Keton) oder PI (Polyimid), besteht. Der Hochleistungskunststoff kann zusätzlich einen Graphitanteil aufweisen. Eine solche Metallmembran weist stabile Federeigenschaften auf, wodurch das Abheben des Dichtungsrings bei extrem hoher Drehzahl des Turboladers verbessert bzw. reproduzierbar wird. Der genannte Hochleistungskunststoff eignet sich aufgrund seiner guten Verschleisseigenschaften sowie seiner Öl- und Temperaturbeständigkeit besonders für die Herstellung stark beanspruchter Berührungsdichtungen.

Ferner ist es vorteilhaft, wenn das Tragteil an seinem freien, äusseren Bereich abgekröpft ist. Dabei umschliesst entweder der Dichtungsring das Tragteil in dessen gekröpftem Bereich oder der gekröpfte Bereich des Tragteils den Dichtungsring, jeweils zumindest teilweise. Dazu wird der Hochleistungskunststoff um die Metallmembran gespritzt oder gepresst, was eine einfache, formschlüssige Verbindung des Tragteils mit dem Dichtungsring zur Folge hat. In einer zweiten Variante wird durch Kleben oder Verschweissen zusätzlich zur formschlüssigen eine stoffschlüssige Verbindung zwischen Dichtungsring und Tragteil hergestellt.

Schliesslich sind am Umfang des Tragteils mehrere Schlitze ausgebildet, welche sich maximal über den gesamten Befestigungsbereich des Dichtungsringes erstrecken, zumindest aber im gekröpften Bereich des Tragteils angeordnet sind. Die vorzugsweise halbkreisförmig ausgebildeten Schlitze verbessern die Elastizität der Berührungsdichtung und verhindern Spannungen auf ihrem Umfang. Das innere Befestigungsteil des Tragrings ist kraft- oder formschlüssig zwischen den Arbeitsräumen befestigt.

### Kurze Beschreibung der Zeichnung

In der Zeichnung sind mehrere Ausführungsbeispiele der Erfindung anhand einer Berührungsdichtung für Abgasturbolader dargestellt.

Es zeigen:
- Fig. 1: einen Teillängsschnitt des Turboladergehäuses mit einer zwischen dem Verdichter- und dem Lagergehäuse angeordneten Berührungsdichtung;
- Fig. 2: die Berührungsdichtung, vergrössert dargestellt, in einer ersten Ausführungsform;
- Fig. 3: die Berührungsdichtung entsprechend Fig. 2, in einer zweiten Ausführungsform;
- Fig. 4: die Berührungsdichtung entsprechend Fig. 2, in einer dritten Ausführungsform;
- Fig. 5: einen Teillängsschnitt des Turboladergehäuses entsprechend Fig. 1, in einer nächsten Ausführungsform;
- Fig. 6: eine vergrösserte Darstellung der Berührungsdichtung entsprechend Fig. 5.

Es sind nur die für das Verständnis der Erfindung wesentlichen Elemente gezeigt. Nicht dargestellt ist beispielsweise die Turbinenseite des Abgasturboladers. Die Strömungsrichtung der Arbeitsmittel ist mit Pfeilen dargestellt.

### Weg zur Ausführung der Erfindung

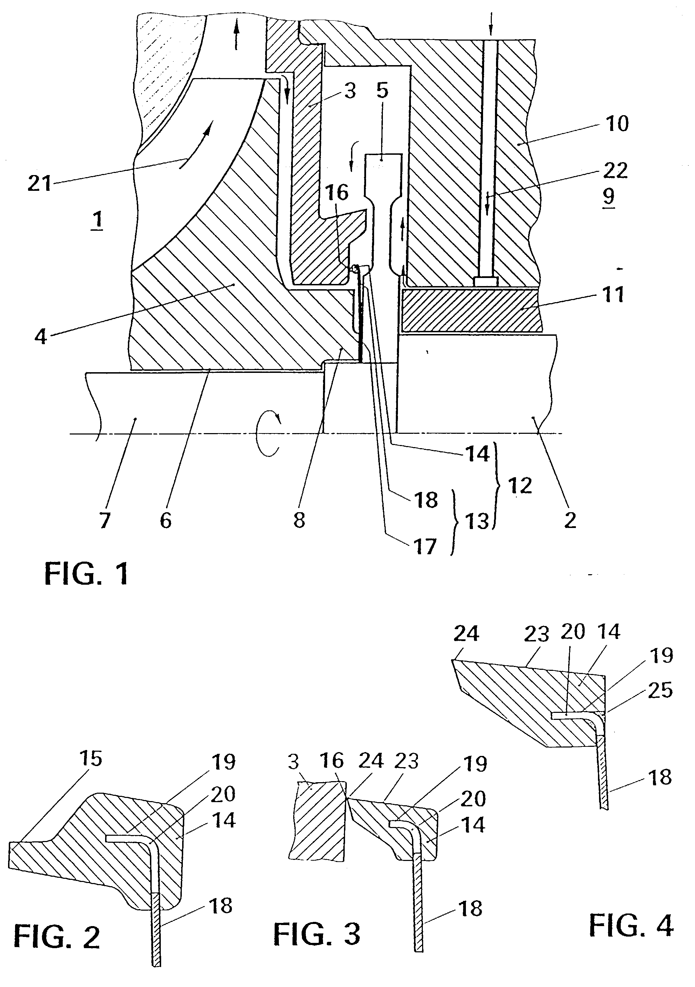

Der Abgasturbolader besteht aus einem Verdichter 1 und einer Abgasturbine, die beide auf einer gemeinsamen Welle 2 angeordnet sind. Der Verdichter 1 weist ein Verdichtergehäuse 3, ein Verdichterrad 4 und einen als Schleuderscheibe ausgebildeten Distanzring 5 auf. Das Verdichterrad 4 ist besitzt eine zentrale Bohrung 6 zur Aufnahme eines Endes 7 der Welle 2. Dazu weist das Verdichterrad 4 eine bis in das Verdichtergehäuse 3 verlängerte Radbüchse 8 auf. Axial neben der Schleuderscheibe 5 ist ein Lagerbereich 9 angeordnet, welcher aus einem Lagergehäuse 10 und einem Gleitlager 11 besteht. Mit dem Verdichter 1 und dem Lagerbereich 9 sind zwei unterschiedliche Druckverhältnisse aufweisende Arbeitsräume des Turboladers miteinander verbunden und gegeneinander abgedichtet. Dazu ist zwischen diesen Arbeitsräumen 1, 9 eine Berührungsdichtung 12 kraftschlüssig angeordnet (Fig. 1). Natürlich kann eine solche Berührungsdichtung 12 auch zur Abdichtung der nicht dargestellten Abgasturbine gegenüber dem Lagerbereich 9 verwendet werden.

Die Berührungsdichtung 12 besteht aus einem dünnen, als Metallmembran ausgebildeten Tragring 13 und aus einem Dichtungsring 14. Der Dichtungsring 14 besitzt eine Dichtnase 15 (Fig. 2) welche an einer Dichtfläche 16 des Verdichtergehäuses 3 anliegt (Fig. 1). Die Metallmembran 13 besteht aus Federstahl, kann aber auch aus einem anderen Material, beispielsweise Federbronze gefertigt werden. Sie weist ein inneres Befestigungsteil 17 sowie ein äusseres Tragteil 18 auf. Das Tragteil 18 ist an seinem freien, äusseren Bereich 19 in Richtung der Dichtfläche 16 abgekröpft und in gleicher Richtung geneigt ausgebildet. Natürlich kann der äussere Bereich 19 des Tragteils 18 auch in die entgegengesetzte Richtung abgekröpft sein (nicht dargestellt). Der Dichtungsring 14 umschliesst das Tragteil 18 in dessen gekröpftem Bereich 19. Am Umfang des Tragteils 18 sind mehrere Schlitze 20 ausgebildet, welche sich über nahezu den gesamten Befestigungsbereich des Dichtungsrings 14 am Tragteil 18 erstrecken (Fig. 2). Die Schlitze 20 sind halbkreisförmig ausgebildet. Das innere Befestigungsteil 17 der Metallmembran 13 ist zwischen den axialen Bereichen der Radbüchse 8 und der Schleuderscheibe 5 verklemmt (Fig. 1).

Als Material für den Dichtungsring 14 wird Polyether-Ether-Keton (PEEK) eingesetzt, welches zusätzlich einen Graphitanteil enthalten kann. Dieser verschleissfeste, ausreichend öl- und wärmebeständige Hochleistungskunststoff ist besonders gut zur Abdichtung zwischen dem Verdichter- und dem Lagergehäuse 3, 10 des Turboladers geeignet. Natürlich können auch andere Hochleistungskunststoffe, wie z.B. Polyimid (PI), verwendet werden. Bei der Herstellung der Berührungsdichtung 12 wird der Hochleistungskunststoff um die Metallmembran 13 gespritzt was eine einfache, formschlüssige Verbindung des Tragteils 18 mit dem Dichtungsring 14 zur Folge hat. Natürlich kann der Formschluss auch durch entsprechendes Aufpressen des Hochleistungskunststoffes auf die Metallmembran 13 erzeugt werden.

Die Berührungsdichtung 12 kann mit gleicher, vorteilhafter Wirkung ebenso zwischen den benachbarten, unterschiedliche Druckverhältnisse aufweisenden Arbeitsräumen einer anderen Strömungsmaschine angeordnet werden.

Im Normalbetrieb des Turboladers werden der Verdichter 1 und der Lagerbereich 9 durch die Berührungsdichtung 12 gegeneinander abgedichtet. Auf diese Weise wird das wechselseitige Eindringen von Luft 21, als Arbeitsmedium des Verdichters 1, und von Schmieröl 22, als Arbeitsmedium des Lagerbereiches 9, in den jeweils anderen Arbeitsraum 9 bzw. 1 verhindert. Dazu ist das Tragteil 18 in Richtung der Dichtfläche 16 geneigt, so dass der Dichtungsring 14 mit seiner Dichtnase 15 am Verdichtergehäuse 3 anliegt. Die Metallmembran 13 gewährleistet dabei die bei hohen Umfangsgeschwindigkeiten erforderliche Stützwirkung für den Dichtungsring 14, während die Schlitze 20 die Elastizität der Berührungsdichtung 12 verbessern und die Ausbildung von Spannungen auf ihrem Umfang verhindern. Wird die Drehzahl über den kritischen Betriebszustand erhöht, so erfolgt aufgrund der Federwirkung der Metallmembran 13 das Abheben des Dichtungsrings 14 von der Dichtfläche 16. In dieser Situation ist die Abdichtung von Verdichter 1 und Lagerbereich 9 dadurch gewährleistet, dass auf der Verdichterseite ein höherer Druck aufgebaut wird. Zudem wirkt die Schleuderscheibe 5 in rotierendem Zustand als dynamische Dichtung, d.h. sie besitzt eine Abspritzwirkung. Bei absinkender Drehzahl des Turboladers nimmt der Dichtungsring 14 wieder seine Ausgangsstellung an der Dichtfläche 16 ein.

In einem zweiten Ausführungsbeispiel weist der Dichtungsring 14 eine Aussenfläche 23 auf, deren Umfang in Richtung der Dichtfläche 16 des Verdichtergehäuses 3 zunimmt. Am grössten Umfang der Aussenfläche 23 ist eine Dichtkante 24 ausgebildet, mit welcher der Dichtungsring 14 an der Dichtfläche 16 des Verdichtergehäuses 3 anliegt (Fig. 3). Aufgrund des zur Lagerseite abnehmenden Umfangs der Aussenfläche 23 des Dichtungsrings 14 fliesst das Schmieröl 22 stets in diese Richtung ab. Dadurch wird die Dichtkante 24 ölfrei gehalten. Ausserdem wird im radial äusseren Bereich des Dichtungsrings 14, auch bei unterschiedlichen Vorspannungen der Berührungsdichtung 12, stets eine Kantenpressung erzielt. Dies hat eine verbesserte Dichtwirkung zur Folge.

In einem dritten Ausführungsbeispiel umschliesst der Dichtungsring 14 das Tragteil 18 der Metallmembran in dessen gekröpftem Bereich 19 nur teilweise (Fig. 4). Im Zwischenraum von Dichtungsring 14 und gekröpftem Bereich 19, d.h. dort wo letzterer nicht mehr direkt vom Dichtungsring 14 umschlossen wird, ist ein Klebstoff 25 aufgebracht. Damit entsteht zusätzlich zur formschlüssigen Verbindung auch eine stabile Klebverbindung von Dichtungsring 14 und Tragteil 18. Natürlich kann auch eine andere, stoffschlüssige Verbindung hergestellt werden, beispielsweise durch Verschweissen.

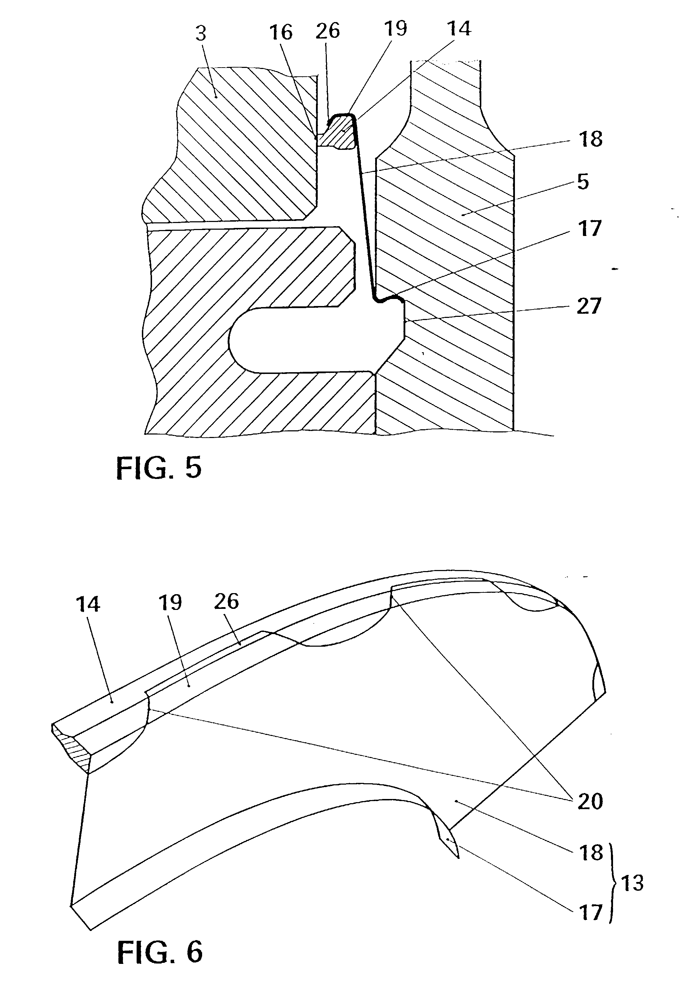

Ein weiteres Ausführungsbeispiel, bei dem der gekröpfte Bereich 19 des Tragteils 18 den Dichtungsring 14 teilweise umschliesst, ist in Fig. 5 dargestellt. Die Verbindung von Dichtungsring 14 und Tragteil 18 erfolgt dabei formschlüssig, d.h. durch nach innen gebördelte Lappen 26. Zur Fixierung der Berührungsdichtung 12 besitzt die Schleuderscheibe 5, auf der Verdichterseite eine Ausnehmung 27, welche mit einem entsprechend ausgebildeten Befestigungsteil 17 der Metallmembran 13 korrespondiert. Aufgrund dieses formschlüssigen Schnappverschlusses wird der Montageaufwand der Berührungsdichtung 12 verringert. Die Fig. 6 zeigt eine vergrösserte, perspektivische Darstellung der Berührungsdichtung 12 mit den halbkreisförmigen Schlitzen 20.

### Bezugszeichenliste

- 1: Verdichter, Arbeitsraum
- 2: Welle
- 3: Verdichtergehäuse
- 4: Verdichterrad
- 5: Distanzring, Schleuderscheibe
- 6: Bohrung
- 7: Ende, Wellenende
- 8: Radbüchse
- 9: Lagerbereich, Arbeitsraum
- 10: Lagergehäuse
- 11: Gleitlager
- 12: Berührungsdichtung
- 13: Tragring, Metallmembran
- 14: Dichtungsring
- 15: Dichtnase
- 16: Dichtfläche
- 17: Befestigungsteil
- 18: Tragteil
- 19: äusserer Bereich, gekröpft
- 20: Schlitz
- 21: Luft
- 22: Schmieröl
- 23: Aussenfläche
- 24: Dichtkante
- 25: Klebstoff
- 26: Lappen
- 27: Ausnehmung von 5

## Patentansprüche

1. Berührungsdichtung für schnellaufende und/oder hohe Temperaturen im Dichtungsbereich aufweisende Strömungsmaschinen, welche zwischen zwei benachbarten, unterschiedliche Druckverhältnisse aufweisenden Arbeitsräumen (1, 9) einer Strömungsmaschine, diese gegeneinander abdichtend, kraft- oder formschlüssig befestigt ist, dazu an einer Dichtfläche (16) eines der Arbeitsräume (1, 9) anliegt und bei einer Drehzahl oberhalb ihres kritischen Betriebspunktes von der Dichtfläche (16) abhebt, dadurch gekennzeichnet, dass
a) die Berührungsdichtung (12) zumindest zweiteilig ausgebildet ist und aus einem dünnen Tragring (13) sowie einem Dichtungsring (14) besteht,
b) der Dichtungsring (14) aus einem verschleissfesten, ausreichend öl- und wärmebeständigen Material besteht,
c) der Tragring (13) aus einem auch bei hohen Belastungen vollkommen reversiblen, elastischen Werkstoff besteht und ein inneres Befestigungsteil (17) sowie ein äusseres Tragteil (18) aufweist,
d) das Tragteil (18) formschlüssig mit dem Dichtungsring (14) verbunden ist,
e) zumindest das Tragteil (18), in montiertem Zustand der Berührungsdichtung, in Richtung der Dichtfläche (16) geneigt ausgebildet ist.

2. Berührungsdichtung nach Anspruch 1, dadurch gekennzeichnet, dass der Dichtungsring (14) eine Aussenfläche (23) aufweist, deren Umfang in Richtung der Dichtfläche (16) zunimmt und am grössten Umfang eine an der Dichtfläche (16) anliegende Dichtkante (24) ausgebildet ist.

3. Berührungsdichtung nach Anspruch 1 oder 2, dadurch gekennzeichnet, dass der Tragring (13) aus einer Metallmembran, insbesondere aus Federstahl, und der Dichtungsring (14) aus einem Hochleistungskunststoff besteht.

4. Berührungsdichtung nach Anspruch 3, dadurch gekennzeichnet, dass der Hochleistungskunststoff einen Graphitanteil aufweist.

5. Berührungsdichtung nach Anspruch 3 oder 4, dadurch gekennzeichnet, dass zusätzlich zur formschlüssigen Verbindung von Tragteil (18) und Dichtungsring (14) zwischen beiden Bauteilen eine stoffschlüssige Verbindung ausgebildet ist.

6. Berührungsdichtung nach einem der Ansprüche 1 bis 5 dadurch gekennzeichnet, dass das Tragteil (18) an seinem freien, äusseren Bereich (19) abgekröpft ist und der Dichtungsring (14) das Tragteil (18) in dessen gekröpftem Bereich (19) zumindest teilweise umschliesst.

7. Berührungsdichtung nach einem der Ansprüche 1 bis 5, dadurch gekennzeichnet, dass das Tragteil (18) an seinem freien, äusseren Bereich (19) in Richtung der Dichtfläche (16) abgekröpft ist und der gekröpfte Bereich (19) den Dichtungsring (14) zumindest teilweise umschliesst.

8. Berührungsdichtung nach Anspruch 6 oder 7, dadurch gekennzeichnet, dass am Umfang des Tragteils (18) mehrere Schlitze (20) ausgebildet sind, welche sich maximal über den gesamten Befestigungsbereich des Dichtungsringes (14) erstrecken, zumindest aber im gekröpften Bereich (19) des Tragteils (18) angeordnet sind.

9. Berührungsdichtung nach Anspruch 8, dadurch gekennzeichnet, dass die Schlitze (20) halbkreisförmig ausgebildet sind.
